# DEMANDE DE BREVET EUROPEEN

(11) **EP 2 693 699 A1**
(43) Date de publication de la demande: **05.02.2014**
(21) Numéro de dépôt: 13178712.9
(22) Date de dépôt: 31.07.2013
(51) Int. Cl.: H04L 12/28, H04M 11/06, H04Q 11/04

(54) **Dispositif et système d acheminement et de récupération de flux VDI**

(30) Priorité: 03.08.2012 FR 1257568
(71) Demandeur: Omelcom, 01160 Pont d'Ain (FR)
(72) Inventeur: Babiarz, Romuald, 01120 MONTLUEL (FR); Chulio, Thomas, 01120 DAGNEUX (FR)
(74) Mandataire: Verriest, Philippe

(57) **Abrégé**

La présente invention a pour objet un dispositif d'acheminement et de récupération de flux VDI destiné à être logé dans une installation VDI, comprenant :
- au moins un premier connecteur (10), agencé pour diffuser un flux d'un premier type (F1) sur au moins une paire de fils conducteurs du premier connecteur (10),
- au moins un deuxième connecteur (20), agencé pour diffuser un flux d'un deuxième type (F2) différent du flux de premier type (F1) sur une pluralité de paires de fils conducteurs du deuxième connecteur (20), cette pluralité de paires étant au moins deux fois supérieure au nombre de paire de fils conducteurs utilisé par le premier connecteur (10) pour diffuser le flux de premier type (F1),
- un troisième connecteur (30), agencé pour diffuser le flux de deuxième type (F2) sur une même pluralité de paires de fils conducteurs du troisième conducteur (30) que celle utilisée par le deuxième connecteur (20) pour diffuser le flux de deuxième type (F2),
- des moyens de superposition/dissociation (40) de flux agencés pour diffuser sur le troisième connecteur (30) le flux de premier type (F1) diffusé par le premier connecteur (10) sur au moins deux paires de fils conducteurs du troisième connecteur (30) utilisées pour diffuser tout ou partie du flux de deuxième type (F2).

## Description

La présente invention concerne le domaine des réseaux multimédia de communication (réseaux courants faibles), et plus particulièrement ceux dédiés à la VDI (Voix - Données - Images) tels que les flux d'informations issus ou à destination d'un téléphone, d'un ordinateur, d'un modem/routeur internet, d'une antenne télévision ou satellite, etc...

Plus précisément, l'invention a pour objet un dispositif d'acheminement et de récupération de flux VDI destiné à être logé dans un tableau de communication ou en ambiance ainsi qu'un système comprenant deux de ces dispositifs.

Le tableau de communication (d'un logement ou d'un bureau) est le point de départ de tous les câbles de courant faible vers les différentes pièces d'un logement dites en ambiance.

Il est connu de regrouper en un seul point central tous les départs des courants faibles dans un « tableau de communication ». Cela vaut pour tous les flux ou signaux de communication. De ce tableau partent des câbles de communication à paires torsadées (type câble Ethernet) et chaque câble arrive sur une prise murale (généralement au standard RJ45) dans une pièce du bâtiment (logement, atelier, bureau, etc...).

Ce tableau de communication est donc un peu l'équivalent des baies de brassage informatiques, si ce n'est qu'en plus de l'informatique, d'autres données peuvent transiter par lui (téléphone, télévision, etc...).

Ainsi, le tableau de communication est le lieu où l'on réalise l'aiguillage entre les différentes arrivées de flux VDI : arrivée téléphone, arrivée télévision hertzienne, satellite ou câblée, arrivée informatique et TV sur IP en provenance d'un modem-routeur autrement appelé Box, etc...

Le câblage de ces infrastructures est réalisé selon une typologie étoile. Les différentes prises du logement qu'elles soient de type RJ45 ou coaxiales, sont raccordées à des câbles provenant obligatoirement du centre de concentration de l'étoile matérialisé par le tableau de communication. De plus, les départs vers les prises RJ45 murales du logement sont effectués à partir d'un connecteur de même nature, donnant ainsi une possibilité d'affectation initiale et après coup du ou des médias distribués à la prise murale concernée.

Les installations Voix - Données - Images résidentielles sont communément constituées :
- soit par une double infrastructure de câblage avec :
- une infrastructure de type coaxiale pour la diffusion de la radio et de la télévision terrestre, câblée ou satellite via des signaux radiofréquences,
- une infrastructure à paires torsadées pour la diffusion du/des lignes téléphoniques, des signaux xDSL et pour le partage de la connexion Internet issu d'un modem-routeur et la mise en réseau LAN des équipements informatiques via une connexion Ethernet de type FAST ETHERNET ou GIGABIT ETHERNET,
- soit par une infrastructure de câblage unique à paires torsadées pour la diffusion de l'ensemble des signaux VDI tels que la radio et la télévision terrestre, câblée ou satellite via des signaux radiofréquences, des lignes téléphoniques, des signaux xDSL, pour le partage de la connexion Internet issu d'un modem-routeur et la mise en réseau LAN des équipements informatiques via une connexion Ethernet de type FAST ETHERNET ou GIGABIT ETHERNET.

L'infrastructure de câblage à paires torsadées est communément réalisée par des cables à quatres paires torsadées reliant d'une part une prise du type RJ45 femelle située au niveau du tableau de communication et d'autre part une prise RJ45 femelle disposée en ambiance dans une pièce du logement.

Nombreux médias présents dans les installations résidentielles proviennent des offres et services délivrés par les fournisseurs d'accès à Internet par l'intermédiaire d'un modem-routeur plus communément appelé Box. Dans le cadre des offres « Triple Play » ces médias sont :
- la connexion Internet partageable dans le réseau local résidentiel de type LAN car délivrée par la Box via le protocole TCP/IP sous un format Ethernet,
- la télévision par Internet constituée par de larges bouquets de chaînes mais également par de multiples offres telles que la vidéo à la demande, la consultation de la météo, du trafic routier ou encore de la messagerie vocal Internet, délivrée également par la Box via le protocole TCP/IP sous un format Ethernet.
- la téléphonie par Internet délivrée par la Box sous la forme d'une ligne téléphonique émulée permettant aux utilisateurs finaux (particuliers) de connecter un téléphone standard, c'est-à-dire identique à celui historiquement connecté à la ligne téléphonique analogique délivrée en France par l'opérateur France Telecom.

La logique technique issu du monde des bâtiments tertiaires (entreprises et bureaux) a amené les fabricants de tableaux de communication à imposer dans leur solution la localisation de la Box au centre de l'infrastructure de câblage en étoile du logement, c'est-à-dire dans ou à proximité du tableau de communication. Cet emplacement pour la Box est en effet intéressant pour permettre à l'utilisateur final (particulier) de diffuser les média fourni par le fournisseur d'accès en les attribuant aux prises murales du logement sur lesquelles il désire raccorder les équipements correspondant au média diffusé.

Cependant, les évolutions des modems-routeurs (Box) initiées par les opérateurs (fournisseur d'accès à Internet) laissent entrevoir leur volonté de voir cette Box localisée en ambiance avec l'arrivée de nouvelles fonctionnalités dont l'usage impose naturellement la localisation de la Box en ambiance dans un espace de vie du logement (Affichage de l'heure, serveur musical avec haut-parleurs de diffusion intégré, ...) et l'amélioration notoire du design des boîtier avec la mise à la griffe de créateur incitant le particulier à vouloir voir et faire voir « l'objet Box » (groupe d'appartenance).

Pour pouvoir disposer des médias sur des prises du logement, il est nécessaire de récupérer les flux sortant du modem-routeur Box placé en ambiance pour les acheminer jusqu'au centre de l'étoile dans le tableau de communication. Dans l'état actuel des connaissances, plusieurs techniques sont possibles :
- soit en localisant plusieurs prises et de câbles à l'emplacement choisi pour le placement en ambiance dans l'espace de vie du modem-routeur Box avec autant de prises et de câbles les reliant au tableaux de communication que de flux à véhiculer (flux desservant la box pour acheminer le signal entrant et flux issus de la box à réacheminer vers le tableau de communication, soit un minimum de 3 prises et 3 câbles). Cette solution engendre un surcout dans l'installation de l'infrastructure du logement et impose l'emplacement du modem-routeur Box qui ne pourra être changé,
- soit en utilisant un dispositif de connexion passif réalisant un simple aiguillage des paires d'un câble. Ainsi un seul câble peut être utilisé pour la connexion du modem-routeur Box et le réacheminement des flux sortant vers le tableau de communication. Les paires du câble sont utilisées par exemple de la façon suivante :

- acheminement du signal xDSL vers le modem-routeur Box pour rendre fonctionnelle la connexion aux services du fournisseur d'accès internet en utilisant une paire du câble (de préférence la paire 4-5).
- récupération des signaux IP (Internet et/ou télévision par internet) issus du modem-routeur box pour les diffuser jusqu'au tableau de communication en utilisant 2 paires du câbles (1-2 et 3-6, soit un signal de type Fast Ethernet) pour les retransmettre vers une ou plusieurs prises RJ45 du logement (via un switch).
- utilisation de la paire restante (7-8) pour récupérer le signal de téléphonie par Internet (Tel IP), le diffuser jusqu'au tableau de communication et le retransmettre vers une ou plusieurs prises RJ45 du logement (via un répartiteur téléphonique).

Cette solution a l'avantage de ne pas augmenter le coût de l'infrastructure mais présente comme inconvénient de limiter le débit du flux Ethernet issu de la Box.

En effet, l'utilisation de deux paires pour les signaux xDSL et Tel@ brident la connexion Ethernet au débit maximal admissible via 2 paires qu'est le Fast Ethernet (100 Mbit).

Or, dans le but d'une amélioration des performances au niveau du débit du réseau, il est intéressant de passer à une liaison de type Gigabit Ethernet (1 Gbit) qui nécessite les 4 paires de conducteurs.

De plus, cette solution de mise en ambiance de la box n'est possible qu'en cas de liaison xDSL de type cuivre. En effet, elle est incompatible dans le cas par exemple d'une liaison fibre de type FTTH (Fiber To The Home) avec un « ONT » (Optical Network Termination) disposé à proximité du tableau de communication, puisque la box nécessite une connexion sur deux paires du câble avec l'ONT pour être fonctionnelle.

La présente invention a pour but de résoudre les inconvénients mentionnés ci-dessus.

A cet effet, la présente invention a pour objet un dispositif d'acheminement et de récupération de flux VDI destiné à être logé dans une installation VDI, comprenant :
- au moins un premier connecteur, agencé pour diffuser un flux d'un premier type sur au moins une paire de fils conducteurs du premier connecteur,
- au moins un deuxième connecteur, agencé pour diffuser un flux d'un deuxième type différent du flux de premier type sur une pluralité de paires de fils conducteurs du deuxième connecteur, cette pluralité de paires étant au moins deux fois supérieure au nombre de paires de fils conducteurs utilisées par le premier connecteur pour diffuser le flux de premier type,
- un troisième connecteur, agencé pour diffuser le flux de deuxième type sur une même pluralité de paires de fils conducteurs du troisième connecteur que celle utilisée par le deuxième connecteur pour diffuser le flux de deuxième type,
- des moyens de superposition/dissociation de flux agencés pour diffuser sur le troisième connecteur le flux de premier type diffusé par le premier connecteur sur une pluralité de paires de fils conducteurs du troisième connecteur utilisée pour diffuser tout ou partie du flux de deuxième type issu du deuxième connecteur, cette pluralité de paires étant au moins deux fois supérieure au nombre de paire de fils conducteurs utilisé par le premier connecteur pour diffuser le flux de premier type.

Cette disposition permet de diffuser des flux supplémentaires par un connecteur dont le nombre de fils conducteurs ne permet pas de diffuser directement ce nombre de flux.

Selon un aspect de l'invention, le flux de premier type et le flux de deuxième type sont diffusés sur des bandes de fréquences différentes.

Cette disposition permet de distinguer les différents flux diffusés par une paire de fils conducteur du troisième connecteur qu'ils soient diffusés directement sur cette paire ou superposés à celle-ci.

Selon un aspect de l'invention, le troisième connecteur peut être du type RJ45 avec quatre paires de fils conducteurs.

Selon un aspect de l'invention, les moyens de superposition/dissociation de flux sont agencés pour relier un premier fil conducteur de l'au moins une paire de fils conducteurs de l'au moins un premier connecteur à une première paire de fils conducteurs du troisième connecteur utilisée pour diffuser une première partie du flux de deuxième type, et pour relier un deuxième fil conducteur de l'au moins une paire de fils conducteurs de l'au moins un premier connecteur à une deuxième paire de fils conducteurs du troisième connecteur utilisée pour diffuser une deuxième partie du flux de deuxième type.

Cette disposition permet d'associer un fil conducteur d'une paire diffusant un flux de premier type aux deux fils conducteurs d'une paire diffusant un flux de deuxième type.

Selon un aspect de l'invention, les moyens de superposition/dissociation de flux comprennent au moins :
- un premier transformateur à point milieu relié d'une part à une première paire de fils conducteurs du deuxième connecteur et relié d'autre part à une première paire de fils conducteurs du troisième connecteur, ces dites premières paires diffusant toutes deux une première partie du flux de deuxième type diffusé par le deuxième connecteur, et dont le point milieu est relié à un premier fil conducteur de l'au moins une paire de fils conducteurs de l'au moins un premier connecteur sur laquelle est diffusé le flux de premier type,
- un deuxième transformateur à point milieu relié d'une part à une deuxième paire de fils conducteurs du deuxième connecteur et relié d'autre part à une deuxième paire de fils conducteurs du troisième connecteur, ces dites deuxième paires diffusant toutes deux une deuxième partie du flux de deuxième type diffusé par le deuxième connecteur, et dont le point milieu est relié à un deuxième fil conducteur de l'au moins une paire de fils conducteurs de l'au moins un premier connecteur sur laquelle est diffusé le flux de premier type.

Selon un aspect de l'invention, le dispositif comporte en plus d'un premier premier connecteur, un deuxième premier connecteur et dans lequel les moyens de superposition/dissociation de flux comprennent en plus d'un premier transformateur à point milieu et d'un deuxième transformateur à point milieu :
- un troisième transformateur à point milieu relié d'une part à une troisième paire de fils conducteurs du deuxième connecteur et relié d'autre part à une troisième paire de fils conducteurs du troisième connecteur, ces dites troisième paires diffusant toutes deux une troisième partie du flux de deuxième type diffusé par le deuxième connecteur, et dont le point milieu est relié à un premier fil conducteur de l'au moins une paire de fils conducteurs du deuxième premier connecteur sur laquelle est diffusé le flux de premier type,
- un quatrième transformateur à point milieu relié d'une part à une quatrième paire de fils conducteurs du deuxième connecteur et relié d'autre part à une quatrième paire de fils conducteurs du troisième connecteur, ces dites quatrième paires diffusant toutes deux une quatrième partie du flux de deuxième type diffusé par le deuxième connecteur, et dont le point milieu est relié à un deuxième fil conducteur de l'au moins une paire de fils conducteurs du deuxième premier connecteur sur laquelle est diffusé le flux de premier type.

Cette disposition permet de diffuser un flux de deuxième type, notamment Gigabit utilisant quatre paires de fils conducteurs du troisième connecteur tout en diffusant sur le troisième connecteur des flux de premier type, comme par exemple un flux xDSL, un flux de téléphone ou un flux radiofréquence (TNT , Satellite, ...).

Selon un aspect de l'invention, le dispositif comporte en plus d'un premier premier connecteur, un deuxième premier connecteur et en plus d'un premier deuxième connecteur, un deuxième deuxième connecteur et dans lequel les moyens de superposition/dissociation de flux comprennent en plus d'un premier transformateur à point milieu et d'un deuxième transformateur à point milieu :
- un troisième transformateur à point milieu relié d'une part à une première paire de fils conducteurs du deuxième deuxième connecteur et relié d'autre part à une troisième paire de fils conducteurs du troisième connecteur, ladite première paire et troisième paire diffusant toutes deux une première partie du flux de deuxième type diffusé par le deuxième deuxième connecteur, et dont le point milieu est relié à un premier fil conducteur de l'au moins une paire de fils conducteurs du deuxième premier connecteur sur laquelle est diffusé le flux de premier type,
- un quatrième transformateur à point milieu relié d'une part à une deuxième paire de fils conducteurs du deuxième deuxième connecteur et relié d'autre part à une quatrième paire de fils conducteurs du troisième connecteur, ladite deuxième paire et quatrième paire diffusant toutes deux une deuxième partie du flux de deuxième type diffusé par le deuxième deuxième connecteur, et dont le point milieu est relié à un deuxième fil conducteur de l'au moins une paire de fils conducteurs du deuxième premier connecteur sur laquelle est diffusé le flux de premier type

Cette disposition permet de diffuser deux flux de deuxième type, notamment deux flux Fast Ethernet utilisant chacun deux paires de fils conducteurs du troisième connecteur tout en diffusant sur le troisième connecteur des flux de premier type, comme par exemple un flux xDSL, un flux de téléphone ou un flux radiofréquence (TNT , Satellite, ...).

Selon un aspect de l'invention, le dispositif comporte un dispositif de terminaison intérieur comportant une prise test réalisant la déconnexion d'une ligne entrante lors de l'insertion d'une fiche dans la prise de test, et/ou comporte un filtre maître xDSL et/ou un Switch Ethernet (Fast Ethernet ou Gigabit Ethernet), et/ou un dispositif de diffusion radiofréquence sur paires torsadée (TV/SAT).

Selon un aspect de l'invention, le dispositif comprend un boîtier modulaire comprenant des moyens de fixation destinés à coopérer avec des moyens de fixation complémentaires disposés sur un rail DIN.

La présente invention a également pour objet un système d'acheminement et de récupération de flux VDI comprenant :
- un premier dispositif d'acheminement et de récupération de flux VDI tel que décrit précédemment et destiné à être placé dans ou à proximité d'un tableau de communication d'un logement, et
- un deuxième dispositif d'acheminement et de récupération de flux VDI tel que décrit précédemment et destiné à être placé en ambiance dans une pièce du logement
- des moyens de liaison du troisième connecteur du premier dispositif avec le troisième connecteur du deuxième dispositif.

De toute façon, l'invention sera bien comprise à l'aide de la description qui suit, en référence au dessin schématique annexé représentant, à titre d'exemple non limitatif, un dispositif d'acheminement et de récupération des flux VDI.
La figure 1 est un schéma synoptique d'un dispositif selon l'invention.
La figure 2 illustre un premier mode de réalisation d'un dispositif selon l'invention.
La figure 3 illustre un deuxième mode de réalisation d'un dispositif selon l'invention.
La figure 4 illustre un troisième mode de réalisation d'un dispositif selon l'invention.
La figure 5 illustre un quatrième mode de réalisation d'un dispositif selon l'invention.

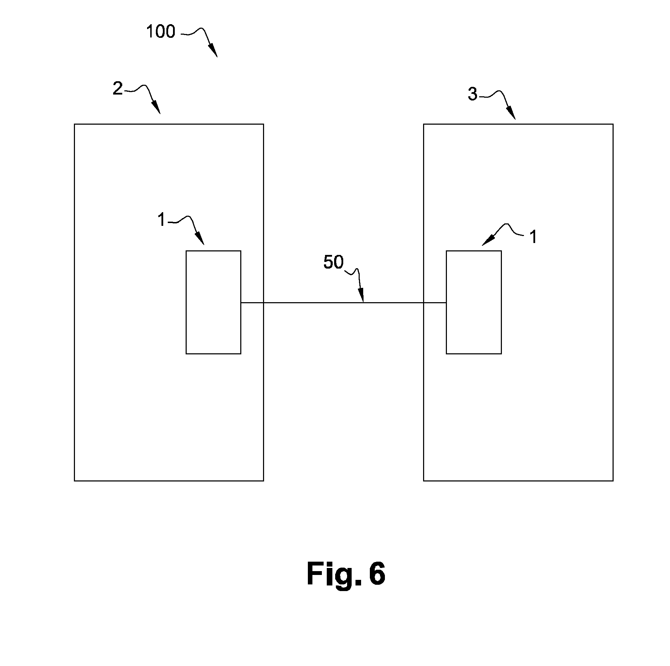

La figure 6 illustre un système d'acheminement et de récupération de flux VDI selon l'invention.

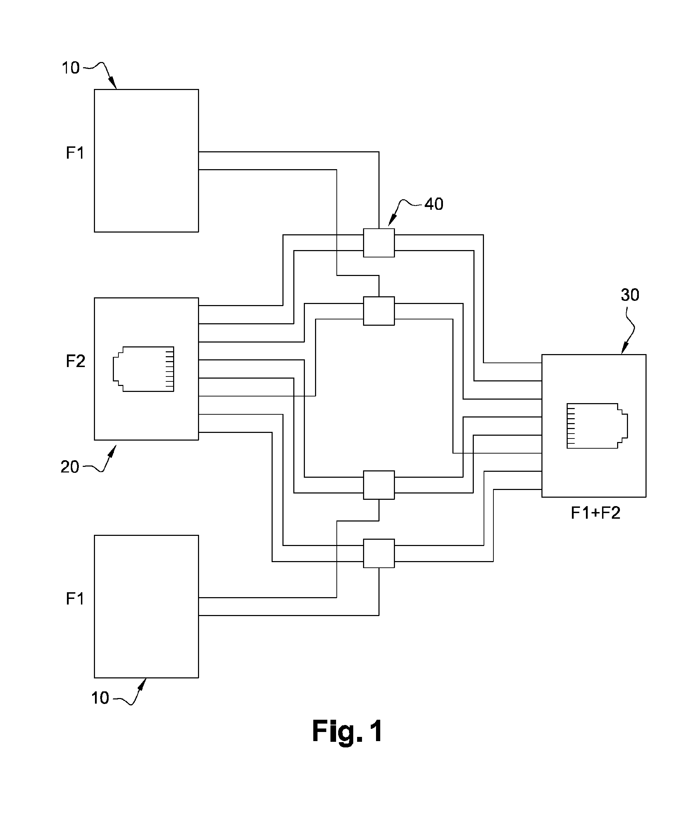

Comme illustré sur les différentes figures 1 à 5, un dispositif 1 d'acheminement et de récupération de flux VDI comprend au moins un premier connecteur 10, agencé pour diffuser un flux d'un premier type F1 sur au moins une paire de fils conducteurs du premier connecteur 10.

En outre, le dispositif 1 comprend au moins un deuxième connecteur 20, agencé pour diffuser un flux d'un deuxième type F2 différent du flux de premier type F1 sur une pluralité de paires de fils conducteurs du deuxième connecteur 20, cette pluralité de paires étant au moins deux fois supérieure au nombre de paire de fils conducteurs utilisé par le premier connecteur 10 pour diffuser le flux de premier type F1.

De plus, le dispositif 1 comprend un troisième connecteur 30, agencé pour diffuser le flux de deuxième type F2 sur une même pluralité de paires de fils conducteurs du troisième connecteur 30 que celle utilisée par le deuxième connecteur 20 pour diffuser le flux de deuxième type F2.

Le flux de premier type F1 émet des signaux sur une bande de fréquence différente que le flux de deuxième type F2.

Les connecteurs 30 et 20 peuvent être du type RJ45 femelle et comprennent donc quatre paires de fils conducteurs 1-8.

Les connecteurs 10 peuvent être de différents types, notamment de type RJ11 dans le cas de flux xDSL ou téléphone, de type F ou IEC dans le cas d'un flux de type radiofréquence, ou de type RJ45 dans les deux cas.

Enfin, selon une caractéristique essentielle de l'invention, le dispositif 1 comprend des moyens de superposition/dissociation 40 de flux agencés pour diffuser sur le troisième connecteur 30 le flux de premier type F1 diffusé par le premier connecteur 10 sur une pluralité de paires de fils conducteurs du troisième connecteur 30 utilisées pour diffuser tout ou partie du flux de deuxième type F2 issu du deuxième connecteur 20, cette pluralité de paires étant au moins deux fois supérieure au nombre de paires de fils conducteurs utilisé par le premier connecteur pour diffuser le flux de premier type.

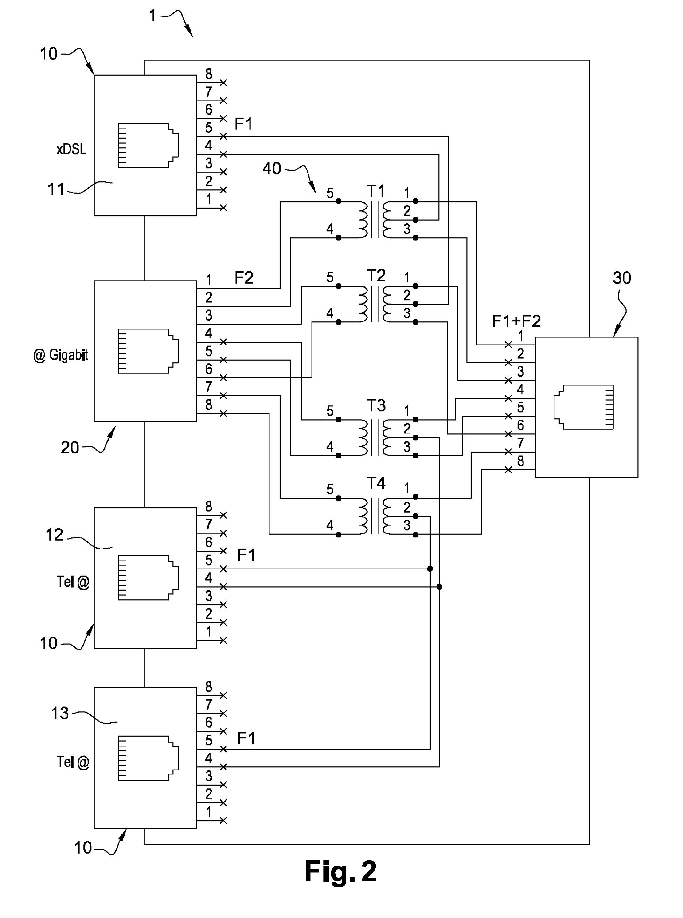

Comme illustré sur les figures 2 à 5, ces moyens de superposition/dissociation 40 comprennent par exemple des transformateurs à point milieu T1, T2, T3, T4.

Chaque transformateur à point milieu T1, T2, T3, T4 comprend un enroulement primaire à deux branches et un enroulement secondaire comprenant deux branches principales et une branche comprenant le point milieu.

L'agencement d'un tel dispositif 1 aux deux extrémités d'un câble réseau multipaires (4 paires) débouchant d'une part en ambiance dans une pièce du logement 3 et d'autre part dans un tableau de communication 2, conduit à former un système 100 d'acheminement et de récupération de flux VDI, le câble à paires torsadées étant connecté sur le troisième connecteur de chacun des deux dispositifs.

Un premier dispositif 1 est placé préférentiellement dans le tableau de communication entre les dispositifs de gestion des medias (filtre xDSL, Box, modem, Switch....) et le bandeau RJ45 de distribution, et un deuxième dispositif 1 est placé préférentiellement entre une prise murale RJ45 de la pièce du logement 3 et les périphériques à connecter, (Box, modem, Switch, téléphone....).

Des moyens de liaisons 50 sont agencés pour relier le troisième connecteur 30 du premier dispositif 1 avec le troisième connecteur 30 du deuxième dispositif 1.

Ces moyens de liaisons 50 peuvent par exemple comprendre le bandeau RJ45 de distribution ainsi que les cordons de raccordement reliant le premier dispositif 1 au bandeau RJ45 de distribution, la prise du logement ainsi que les cordons de raccordement reliant la prise du logement au deuxième dispositif 1, et le câble à paires torsadées reliant le bandeau RJ45 de distribution à la prise du logement.

Le premier mode de réalisation illustré à la figure 2 est destiné à superposer un premier flux xDSL de premier type F1 de fréquence basse et un deuxième flux téléphonique tel@ de premier type F1 de fréquences basses avec un flux Gigabit Ethernet de deuxième type F2 de fréquences hautes.

A cet effet, le dispositif 1 d'acheminement et de récupération de flux VDI comprend un premier 11 premier connecteur 10 destiné à diffuser le flux xDSL, un deuxième 12 premier connecteur 10 destiné à diffuser le flux téléphonique tel@, un deuxième connecteur 20 destiné à diffuser le flux Gigabit Ethernet et un troisième connecteur 30 destiné à diffuser les flux xDSL et téléphonique tel@ superposés au flux Gigabit Ethernet.

En outre, le dispositif 1 comprend quatre transformateurs à point milieu T1, T2, T3, T4.

Chacune des deux branches de l'enroulement primaire des quatre transformateurs à point milieu T1, T2, T3, T4 est relié électriquement à un fil conducteur d'une des quatre paires de fils conducteurs du deuxième connecteur 20 destiné à diffuser le flux Gigabit Ethernet.

Ainsi :
- la paire 1-2 est reliée aux branches de l'enroulement primaire d'un premier transformateur T1,
- la paire 3-6 est reliée aux branches de l'enroulement primaire d'un deuxième transformateur T2,
- la paire 4-5 est reliée aux branches de l'enroulement primaire d'un troisième transformateur T3, et
- la paire 7-8 est reliée aux branches de l'enroulement primaire d'un quatrième transformateur T4.

De même, chacune des deux branches principales de l'enroulement secondaire des quatre transformateurs à point milieu T1, T2, T3, T4 est relié électriquement à un fil conducteur d'une des quatre paires de fils conducteurs du troisième connecteur 30.

Ainsi :
- la paire 1-2 est reliée aux branches principales de l'enroulement secondaire du premier transformateur T1,
- la paire 3-6 est reliée aux branches principales de l'enroulement secondaire du deuxième transformateur T2,
- la paire 4-5 est reliée aux branches principales de l'enroulement secondaire du troisième transformateur T3, et
- la paire 7-8 est reliée aux branches principales de l'enroulement secondaire du quatrième transformateur T4.

Chacun des transformateurs T1, T2, T3, T4 permet donc la diffusion d'une partie du flux de deuxième type F2 diffusé par le deuxième connecteur 20 et par le troisième connecteur 30.

Le flux xDSL est diffusé quant à lui sur la paire 4-5 du premier 11 premier connecteur 10 et le flux téléphonique tel@ est diffusé sur la paire 4-5 du deuxième 12 premier connecteur 10.

Un premier fil conducteur de la paire 4-5 du premier 11 premier connecteur 10 est relié au point milieu du premier transformateur T1 et un deuxième fil conducteur de la paire 4-5 du premier 11 premier connecteur 10 est relié au point milieu du deuxième transformateur T2.

Enfin, un premier fil conducteur de la paire 4-5 du deuxième 12 premier connecteur 10 est relié au point milieu du troisième transformateur T3 et un deuxième fil conducteur de la paire 4-5 du deuxième 12 premier connecteur 10 est relié au point milieu du quatrième transformateur T4.

Selon une variante, le dispositif 1 comprend également un troisième 13 premier connecteur 10 agencé pour diffuser le flux téléphonique tel@ de premier type F1 et dont la paire 4-5 est relié à la paire 4-5 du deuxième 12 premier connecteur 10.

Cette variante trouve son utilité lorsque le dispositif 1 est disposé en ambiance, par exemple pour la connexion d'une box.

Le deuxième 12 premier connecteur 10 est alors utilisé pour récupérer le flux téléphonique tel@ de premier type F1 généré par la box de manière à pouvoir le diffuser vers le tableau de communication 2, et le troisième 13 premier connecteur 10 est utilisé pour connecter directement un téléphone de manière à exploiter directement le flux téléphonique tel@, la sortie correspondante de la box étant déjà utilisée puisque reliée au deuxième 12 premier connecteur 10.

Un système 100 comprenant deux de ces dispositifs 1 permet donc par l'intermédiaire d'une seule prise dans une pièce du logement 3 d'acheminer vers la pièce du logement 3 un flux xDSL nécessaire au fonctionnement d'une box, et de récupérer le flux Gigabit Ethernet et le flux téléphonique tel@ générés par la box de manière à permettre au tableau de communication de les diffuser vers n'importe quelle pièce du logement 3.

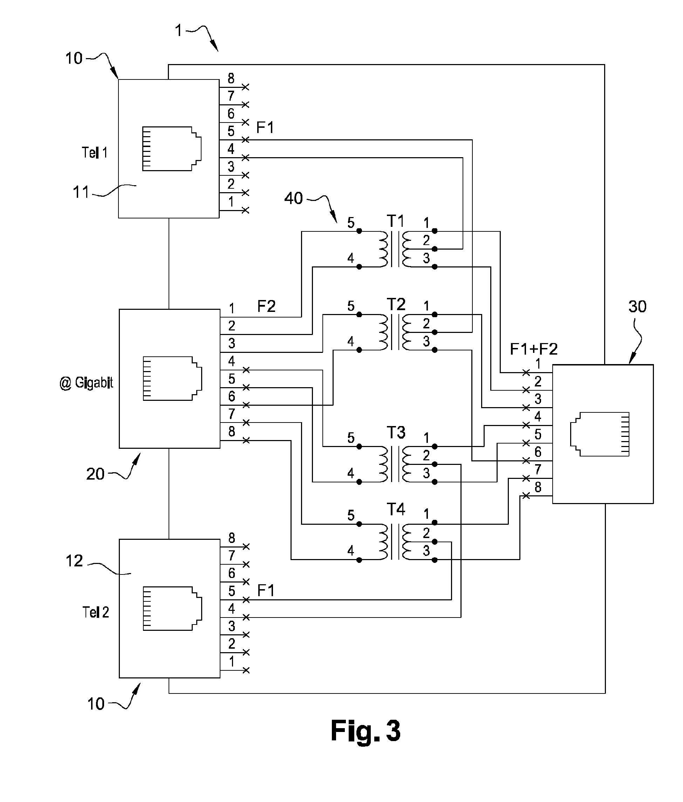

Le deuxième mode de réalisation illustré à la figure 3 est destiné à superposer un premier flux téléphonique Tel1 de premier type F1 de fréquences basses et un deuxième flux téléphonique Tel2 de premier type F1 de fréquences basses avec un deuxième flux Gigabit Ethernet de deuxième type F2 de fréquences hautes.

Le câblage est identique à celui du premier mode de réalisation, mais le flux xDSL est remplacé par le premier flux téléphonique Tel1 et le flux téléphonique Tel@ est remplacé par le deuxième flux téléphonique Tel2.

Un système 100 comprenant deux de ces dispositifs 1 permet donc par l'intermédiaire d'une seule prise dans une pièce du logement 3 d'acheminer vers la pièce du logement 3 deux flux téléphonique Tel1, Tel2 ainsi qu'un flux Gigabit Ethernet et donc de former un doubleur ou un tripleur permettant par exemple de connecter simultanément un périphérique Ethernet Gigabit et un téléphone le cas échéant deux téléphones ou un téléphone et un fax.

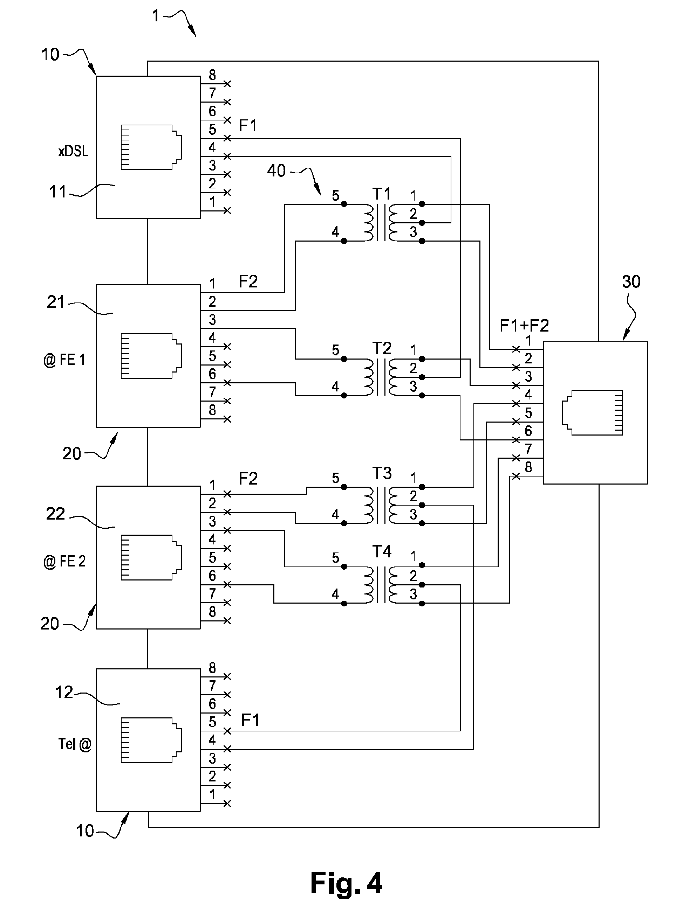

Le troisième mode de réalisation illustré à la figure 4 est destiné à superposer un premier flux xDSL de premier type F1 de fréquence basse avec un premier flux Fast Ethernet FE1 de deuxième type F2 de fréquences hautes et à superposer un deuxième flux téléphonique tel@ de premier type F1 de fréquences basses avec un deuxième flux Fast Ethernet FE2 de deuxième type F2 de fréquences hautes.

En outre, ce troisième mode de réalisation diffère du premier mode de réalisation en ce que le deuxième connecteur 20 est remplacé par un premier 21 deuxième connecteur 20 destiné à diffusé le premier flux Fast Ethernet FE1, et par un deuxième 22 deuxième connecteur 20 destiné à diffusé le deuxième flux Fast Ethernet FE2.

Chacune des deux branches de l'enroulement primaire de deux transformateurs à point milieu T1, T2 est relié électriquement à un fil conducteur d'une des deux paires de fils conducteurs du premier 21 deuxième connecteur 20 destiné à diffuser le premier flux Fast Ethernet FE1.

Ainsi :
- la paire 1-2 est reliée aux branches de l'enroulement primaire d'un premier transformateur T1,
- la paire 3-6 est reliée aux branches de l'enroulement primaire d'un deuxième transformateur T2.

De même, chacune des deux branches de l'enroulement primaire de deux autres transformateurs à point milieu T3, T4 est relié électriquement à un fil conducteur d'une des deux paires de fils conducteurs du deuxième 22 deuxième connecteur 20 destiné à diffuser le deuxième flux Fast Ethernet FE2.

Ainsi :
- la paire 1-2 est reliée aux branches de l'enroulement primaire d'un premier transformateur T3,
- la paire 3-6 est reliée aux branches de l'enroulement primaire d'un deuxième transformateur T4.

De même, chacune des deux branches principales de l'enroulement secondaire des quatre transformateurs à point milieu T1, T2, T3, T4 est relié électriquement à un fil conducteur d'une des quatre paires de fils conducteurs du troisième connecteur 30.

Ainsi :
- la paire 1-2 est reliée aux branches principales de l'enroulement secondaire du premier transformateur T1,
- la paire 3-6 est reliée aux branches principales de l'enroulement secondaire du deuxième transformateur T2,
- la paire 4-5 est reliée aux branches principales de l'enroulement secondaire du troisième transformateur T3, et
- la paire 7-8 est reliée aux branches principales de l'enroulement secondaire du quatrième transformateur T4.

Chacun des transformateurs T1, T2, T3, T4 permet donc la diffusion d'une partie du premier flux FE1 de deuxième type F2 ou d'une partie du deuxième flux FE2 de deuxième type F2 diffusé respectivement par le premier 21 deuxième connecteur 20 et le deuxième 22 deuxième connecteur 20, mais également par le troisième connecteur 30.

Le flux xDSL est diffusé quant à lui sur la paire 4-5 du premier 11 premier connecteur 10 et le flux téléphonique tel@ est diffusé sur la paire 4-5 du deuxième 12 premier connecteur 10.

Un premier fil conducteur de la paire 4-5 du premier 11 premier connecteur 10 est relié au point milieu du premier transformateur T1 et un deuxième fil conducteur de la paire 4-5 du premier 11 premier connecteur 10 est relié au point milieu du deuxième transformateur T2.

Enfin, un premier fil conducteur de la paire 4-5 du deuxième 12 premier connecteur 10 est relié au point milieu du troisième transformateur T3 et un deuxième fil conducteur de la paire 4-5 du deuxième 12 premier connecteur 10 est relié au point milieu du quatrième transformateur T4.

Un système 100 comprenant deux de ces dispositifs 1 permet donc par l'intermédiaire d'une seule prise dans une pièce du logement 3 d'acheminer un flux xDSL nécessaire au fonctionnement d'une box, et de récupérer le flux téléphonique Tel@ généré par la box de manière à permettre au tableau de communication de le diffuser vers n'importe quelle pièce du logement 3 ainsi que deux flux Fast Ethernet issus de deux ports RJ45 de la box distincts pour pouvoir desservir deux prises du logement sans le surcoût imposé par un Switch Ethernet.

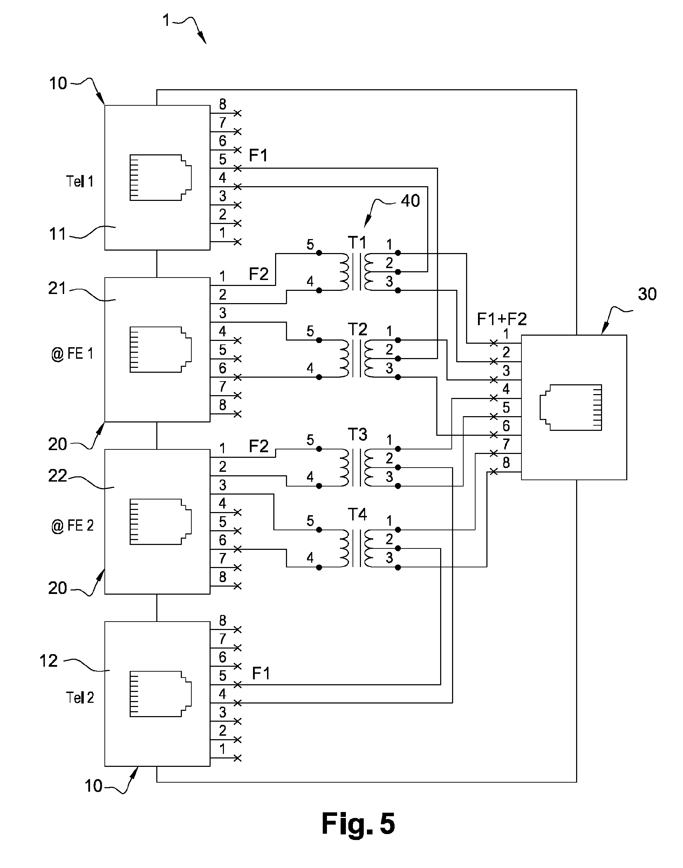

Le quatrième mode de réalisation illustré à la figure 5 est destiné à superposer un premier flux téléphonique Tel1 de premier type F1 de fréquence basse avec un premier flux Fast Ethernet FE1 de deuxième type F2 de fréquences hautes et à superposer un deuxième flux téléphonique Tel2 de premier type F1 de fréquences basses avec un deuxième flux Fast Ethernet FE2 de deuxième type F2 de fréquences hautes.

Le câblage est identique à celui du troisième mode de réalisation, mais le flux xDSL est remplacé par le premier flux téléphonique Tel1 et le flux téléphonique Tel@ est remplacé par le deuxième flux téléphonique Tel2.

Un système 100 comprenant deux de ces dispositifs 1 permet donc par l'intermédiaire d'une seule prise dans une pièce du logement 3 d'acheminer vers la pièce du logement 3 un flux Fast Ethernet FE1 issus d'un dispositif de conversion signal optique/signal électrique nécessaire au fonctionnement d'une box Fibre Optique et de récupérer un flux Fast Ethernet FE2 et un premier flux téléphonique Tel1 générés par une box de manière à permettre au tableau de communication de les diffuser vers n'importe quelle pièce du logement 3.

De plus, le dispositif 1 peut acheminer un deuxième flux téléphonique Tel2 permettant par exemple de connecter une deuxième ligne téléphonique ou un fax.

Enfin, dans un mode de réalisation particulier, le dispositif 1 du système 100 qui est destiné à être disposé dans ou à proximité du tableau de communication 2 comporte un dispositif de terminaison intérieur comportant une prise test réalisant la déconnexion de la ligne entrante lors de l'insertion d'une fiche dans la prise de test, et/ou comporte un filtre maître ADSL et/ou un Switch Ethernet (Fast Ethernet ou Gigabit Ethernet), et/ou un dispositif de diffusion radiofréquence sur paires torsadée (TV/SAT) selon l'utilisation qui peut être faite de ce dispositif 1.

Celui-ci peut également comprendre un boîtier modulaire comprenant des moyens de fixation destinés à coopérer avec des moyens de fixation complémentaires disposés sur un rail DIN dans le tableau de communuication 2.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons.

## Revendications

1. Dispositif (1) d'acheminement et de récupération de flux VDI destiné à être logé dans une installation VDI, comprenant :
- au moins un premier connecteur (10), agencé pour diffuser un flux d'un premier type (F1) sur au moins une paire de fils conducteurs du premier connecteur (10),
- au moins un deuxième connecteur (20), agencé pour diffuser un flux d'un deuxième type (F2) différent du flux de premier type (F1) sur une pluralité de paires de fils conducteurs du deuxième connecteur (20), cette pluralité de paires étant au moins deux fois supérieure au nombre de paires de fils conducteurs utilisées par le premier connecteur (10) pour diffuser le flux de premier type (F1),
- un troisième connecteur (30), agencé pour diffuser le flux de deuxième type (F2) sur une même pluralité de paires de fils conducteurs du troisième connecteur (30) que celle utilisée par le deuxième connecteur (20) pour diffuser le flux de deuxième type (F2),
- des moyens de superposition/dissociation (40) de flux agencés pour diffuser sur le troisième connecteur (30) le flux de premier type (F1) diffusé par le premier connecteur (10) sur une pluralité de paires de fils conducteurs du troisième connecteur (30) utilisée pour diffuser tout ou partie du flux de deuxième type (F2) issu du deuxième connecteur (20), cette pluralité de paires étant au moins deux fois supérieure au nombre de paire de fils conducteurs utilisé par le premier connecteur (10) pour diffuser le flux de premier type (F1).

2. Dispositif (1) selon la revendication 1, dans lequel le flux de premier type (F1) et le flux de deuxième type (F2) sont diffusés sur des bandes de fréquences différentes.

3. Dispositif (1) selon l'une des revendications 1 ou 2, dans lequel les moyens de superposition/dissociation (40) de flux sont agencés pour relier un premier fil conducteur de l'au moins une paire de fils conducteurs de l'au moins un premier connecteur (10) à une première paire de fils conducteurs du troisième connecteur (30) utilisée pour diffuser une première partie du flux de deuxième type (F2), et pour relier un deuxième fil conducteur de l'au moins une paire de fils conducteurs de l'au moins un premier connecteur (10) à une deuxième paire de fils conducteurs du troisième connecteur (30) utilisée pour diffuser une deuxième partie du flux de deuxième type (F2).

4. Dispositif (1) selon l'une des revendications 1 à 3, dans lequel les moyens de superposition/dissociation (40) de flux comprennent au moins :
- un premier transformateur (T1) à point milieu relié d'une part à une première paire de fils conducteurs du deuxième connecteur (20) et relié d'autre part à une première paire de fils conducteurs du troisième connecteur (30), ces dites premières paires diffusant toutes deux une première partie du flux de deuxième type (F2) diffusé par le deuxième connecteur (20), et dont le point milieu est relié à un premier fil conducteur de l'au moins une paire de fils conducteurs de l'au moins un premier connecteur (10) sur laquelle est diffusé le flux de premier type (F1),
- un deuxième transformateur (T2) à point milieu relié d'une part à une deuxième paire de fils conducteurs du deuxième connecteur (20) et relié d'autre part à une deuxième paire de fils conducteurs du troisième connecteur (30), ces dites deuxième paires diffusant toutes deux une deuxième partie du flux de deuxième type (F2) diffusé par le deuxième connecteur (20), et dont le point milieu est relié à un deuxième fil conducteur de l'au moins une paire de fils conducteurs de l'au moins un premier connecteur (10) sur laquelle est diffusé le flux de premier type (F1).

5. Dispositif (1) selon la revendication 4, comportant en plus d'un premier(11) premier connecteur(10), un deuxième (12) premier connecteur (10) et dans lequel les moyens de superposition/dissociation (40) de flux comprennent en plus d'un premier transformateur (T1) à point milieu et d'un deuxième transformateur (T2) à point milieu :
- un troisième transformateur (T3) à point milieu relié d'une part à une troisième paire de fils conducteurs du deuxième connecteur (20) et relié d'autre part à une troisième paire de fils conducteurs du troisième connecteur (30), ces dites troisième paires diffusant toutes deux une troisième partie du flux de deuxième type (F2) diffusé par le deuxième connecteur (20), et dont le point milieu est relié à un premier fil conducteur de l'au moins une paire de fils conducteurs du deuxième (12) premier connecteur (10) sur laquelle est diffusé le flux de premier type (F1),
- un quatrième transformateur (T4) à point milieu relié d'une part à une quatrième paire de fils conducteurs du deuxième connecteur (20) et relié d'autre part à une quatrième paire de fils conducteurs du troisième connecteur (30), ces dites quatrième paires diffusant toutes deux une quatrième partie du flux de deuxième type (F2) diffusé par le deuxième connecteur (20), et dont le point milieu est relié à un deuxième fil conducteur de l'au moins une paire de fils conducteurs du deuxième (12) premier connecteur (10) sur laquelle est diffusé le flux de premier type (F1).

6. Dispositif (1) selon la revendication 4, comportant en plus d'un premier (11) premier connecteur (10), un deuxième premier connecteur et en plus d'un premier (21) deuxième connecteur (20), un deuxième (22) deuxième connecteur (20) et dans lequel les moyens de superposition/dissociation (40) de flux comprennent en plus d'un premier transformateur (T1) à point milieu et d'un deuxième transformateur (T2) à point milieu :
- un troisième transformateur (T3) à point milieu relié d'une part à une première paire de fils conducteurs du deuxième (22) deuxième connecteur (20) et relié d'autre part à une troisième paire de fils conducteurs du troisième connecteur (30), ladite première paire et troisième paire diffusant toutes deux une première partie du flux de deuxième type (F2) diffusé par le deuxième (22) deuxième connecteur (20), et dont le point milieu est relié à un premier fil conducteur de l'au moins une paire de fils conducteurs du deuxième (12) premier connecteur (10) sur laquelle est diffusé le flux de premier type (F1),
- un quatrième transformateur (T4) à point milieu relié d'une part à une deuxième paire de fils conducteurs du deuxième (22) deuxième connecteur (20) et relié d'autre part à une quatrième paire de fils conducteurs du troisième connecteur (30), ladite deuxième paire et quatrième paire diffusant toutes deux une deuxième partie du flux de deuxième type (F2) diffusé par le deuxième (22) deuxième connecteur (20), et dont le point milieu est relié à un deuxième fil conducteur de l'au moins une paire de fils conducteurs du deuxième (12) premier connecteur (10) sur laquelle est diffusé le flux de premier type (F1).

7. Dispositif (1) selon l'une des revendications 1 à 6, comprenant un dispositif de terminaison intérieur comportant une prise test réalisant la déconnexion d'une ligne entrante lors de l'insertion d'une fiche dans la prise de test et/ou comporte un filtre maître xDSL et/ou un Switch Ethernet (Fast Ethernet ou Gigabit Ethernet), et/ou un dispositif de diffusion radiofréquence sur paires torsadée (TV/SAT).

8. Dispositif selon l'une des revendications 1 à 7, comprenant un boîtier modulaire comprenant des moyens de fixation destinés à coopérer avec des moyens de fixation complémentaires disposés sur un rail DIN.

9. Système (1) d'acheminement et de récupération de flux VDI comprenant :
- un premier dispositif d'acheminement (1) et de récupération de flux VDI selon l'une des revendications 1 à 8 et destiné à être placé dans ou à proximité d'un tableau de communication (2) d'un logement, et
- un deuxième dispositif (1) d'acheminement et de récupération de flux VDI selon l'une des revendications 1 à 6 et destiné à être placé en ambiance dans une pièce du logement (3),
- des moyens de liaison (50) du troisième connecteur (30) du premier dispositif (1) avec le troisième connecteur (30) du deuxième dispositif (1).
